(19) Europäisches Patentamt
European Patent Office
Office européen des brevets

(11) EP 0 488 341 B1

(12) **EUROPEAN PATENT SPECIFICATION**

(45) Date of publication and mention of the grant of the patent: **03.09.1997 Bulletin 1997/36**

(51) Int. Cl.[6]: **B01D 71/64**, B01D 53/22, C08G 73/10

(21) Application number: **91120468.3**

(22) Date of filing: **29.11.1991**

(54) **Polyimide gas separation membranes and process of using same**

Polyimid-Gastrennungsmembrane und Verfahren zu ihrer Verwendung

Membranes de séparation de gaz à base de polyimide et procédé pour leur utilisation

(84) Designated Contracting States:
**BE CH DE ES FR GB IT LI NL SE**

(30) Priority: **30.11.1990 US 620256**

(43) Date of publication of application:
**03.06.1992 Bulletin 1992/23**

(73) Proprietor:
**L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventor: **Hayes, Richard Allen**
**Parkersburg, West Virginia 26101 (US)**

(74) Representative: **Abitz, Walter, Dr.-Ing. et al**
**Patentanwälte Abitz & Partner**
**Postfach 86 01 09**
**81628 München (DE)**

(56) References cited:

**EP-A- 0 163 518**
**EP-A- 0 349 008**
**EP-A- 0 361 377**
**EP-A- 0 370 509**
**GB-A- 2 229 180**
**US-A- 4 932 983**

- **PATENT ABSTRACTS OF JAPAN vol. 14, no. 531 (C-780)21 November 1990**
- **PATENT ABSTRACTS OF JAPAN vol. 14, no. 531 (C-780)21 November 1990**
- **JOURNAL OF POLYMER SCIENCE: PART B: POLYMER PHYSICS vol. 27, 1989, NEW-YORK pages 1887 - 1909; S.A. STERN ET. AL.: 'Structure/Permeability Relationships of Polyimide Membranes. Applications to the Separation of Gas Mixtures'**
- **Dictionary of Scientific and technical Terms, McGraw-Hill, 4th edition, 1989, page 714**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 488 341 B1

## Description

### Field of the Invention

The present invention relates to aromatic polyimide gas separation membranes and the process for separating one or more gases from a gaseous mixture using such membranes. The polyimides are derived from a variety of aromatic tetracarboxylic dianhydrides, including some conventionally used to form gas separation membranes and certain diamines in which the amino groups are attached to benzene rings which in turn are bridged by benzene rings.

### Prior Art

U.S. Re 30,351, U.S. 3,822,202, and U.S. 3,899,309 disclose gas separation membrane materials comprising certain semi-rigid aromatic polyimides, polyamides, and polyesters.

U.S. 4,156,597 discloses a gas separation membrane consisting of an ultrathin, dense polyetherimide membrane.

U.S. 4,240,914, U.S. 4,358,378, U.S. 4,385,084, and U.S. 4,410,568 disclose an asymmetric polyimide gas separation membrane prepared from an aliphatic polyimide material.

U.S. 4,307,135 discloses the preparation of an asymmetric polyimide membrane from a soluble polyimide.

U.S. 4,378,324, U.S. 4,460,526, U.S. 4,474,662, U.S. 4,485,056 and U.S. 4,512,893 disclose a process for preparing asymmetric polyimide membranes.

U.S. 4,378,400 discloses polyimide gas separation materials which incorporate 3,3',4,4',-biphenyltetracarboxylic dianhydride residues.

U.S. 4,673,418 discloses the preparation of asymmetric polyetherimide gas separation membranes from solutions of said polymer in volatile solvent-less volatile swelling agent mixtures.

U.S. 4,705,540 discloses aromatic polyimide gas separation membrane materials based on rigid polyimides.

For example, U.S. 3,563,951 describes polyimide materials prepared from the diamine shown below:

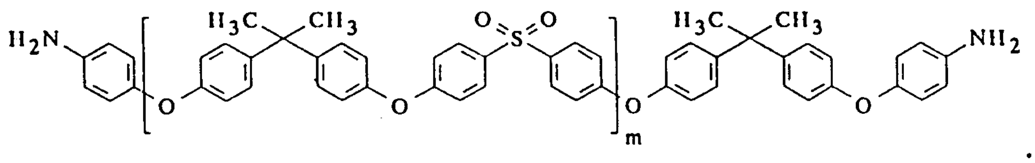

U.S. 4,111,906, U.S. 4,203,922, U.S. 4,735,492, U.S, 4,477,648 and U.S. 4,535,101 describe polyimide materials with diamines which incorporate a bisphenol-AF residue, e.g.;

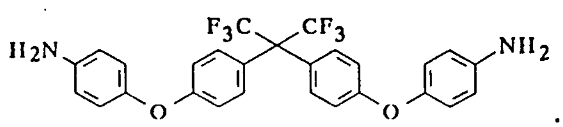

Polyimide materials which incorporate certain bis(aminobenzoyl)diphenyl ether units, shown below, are described in U.S. 4,405,770;

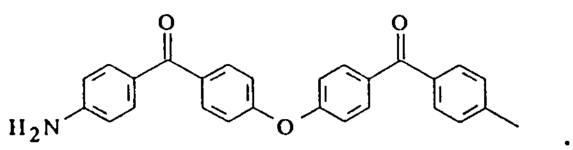

U.S. 4,485,140, U.S. 4,696,994, U.S. 4,725,642, and U.S. 4,758,875 teach the incorporation of diamines, shown below, into polyimide materials;

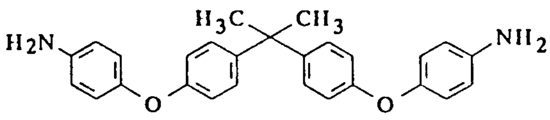
,
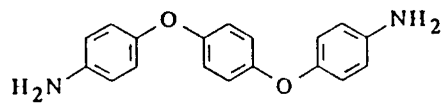
.

Crystalline polyimide materials containing cumulative phenylene sulfide units, shown below, are described in U.S. 4,716,216;

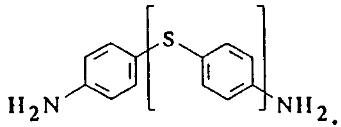

Polyetherimide compositions which incorporate bisaniline-P, shown below, are taught in U.S. 4,774,317;

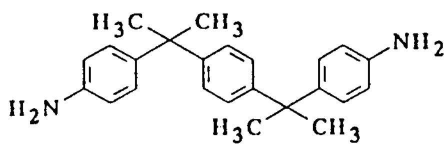
.

U.S. 4,932,983 discloses copolyimide gas separation membranes derived from substituted methylene dianilines and unsubstituted diamines consisting of repeating units of the formula:

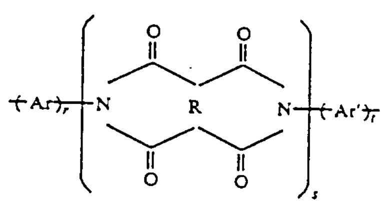

where —Ar— is

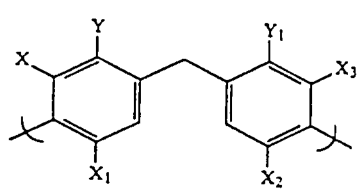

or mixtures thereof, —Ar'— is

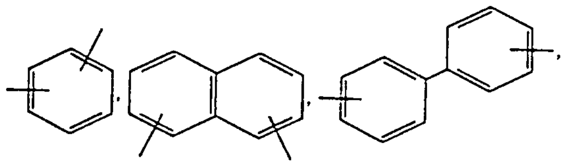

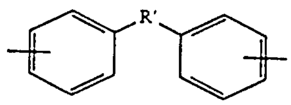

GB-A-2,229,180 discloses gas separation membranes based on polyimides having repeating units of the general formula:

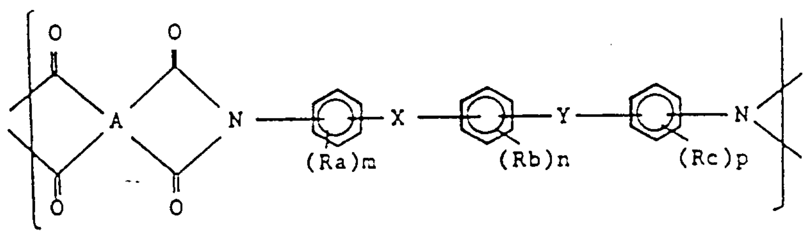

(I)

where A is

or 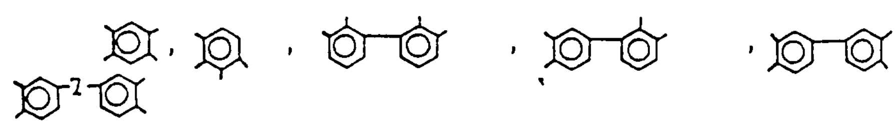

and -Z- is -O-, -CO-, $C(CF_3)_2$-, $-SO_2$, $-C(CH_3)_2$- or -S-; and -X- is -O- or $-C(CH_3)_2$-, -Y- is -O- or $-C(CH_3)_2$- and -X- and -Y- are different; and -Ra is $-CH_3$ or $-CF_3$; and -Rb is -Cl, -F or -Br, or is an alkyl or cycloalkyl group having between 1 and 6 carbon atoms; and -Rc is $-CH_3$ or $-CF_3$; and m, n, p are independently 0, 1, 2, 3 or 4.

## Summary of the Invention

The present invention relates to certain. polyimide separation membranes particularly useful for separating gases and the process for using them. This class of polyimide membrane materials compositionally contain diamine residues which incorporate greater than two aromatic units in the polymer chain. Membranes formed from this class of polyimide materials have improved environmental stability and superior gas productivity. The high selectivities of some gases from multicomponent mixtures is due to the molecular free volume in the polymer. These diamines have the amino groups attached to benzene nuclei which in turn are bridged to at least one aromatic nucleus by any of various divalent radicals.

## Detailed Description

The present invention relates to a gas separation membrane for preferentially separating one or more gases from a gaseous mixture formed from an aromatic polyimide consisting of repeating units of the formula:

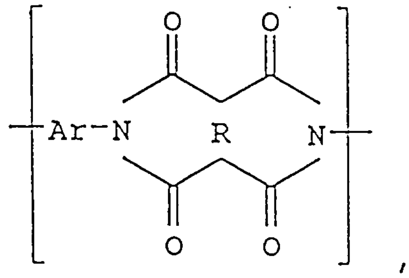

where —Ar— is

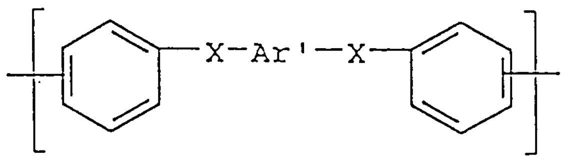

where —Ar'— is

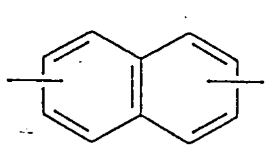

or

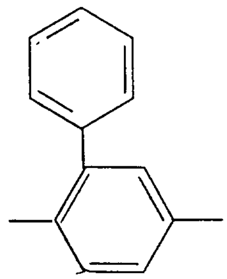

or mixtures thereof,
both —X— substituents are the same and are —O—,

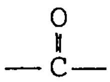, 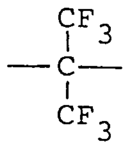, 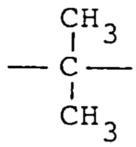, 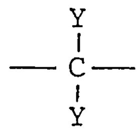 or 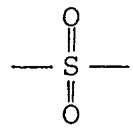

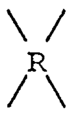 is 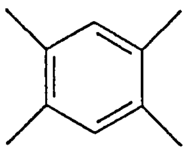, 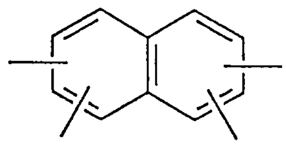,

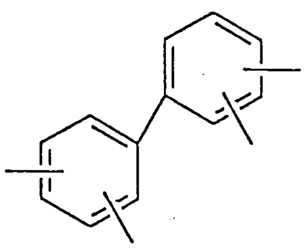, 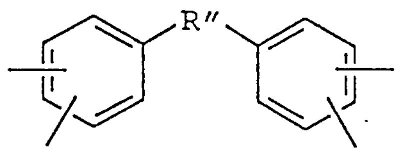,

or mixtures thereof, —Y is independently —H, alkyl groups having 1 to 6 carbon atoms, aromatic groups having 6 to 12 carbon atoms, or halogen, provided that at least one —Y cannot be —H, where n is an integer from 1 to 4 and where R" is
—O—, —S—,

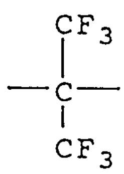, 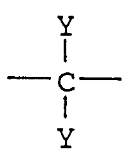, 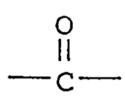, 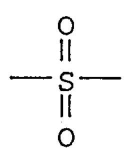, 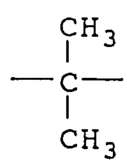,

or 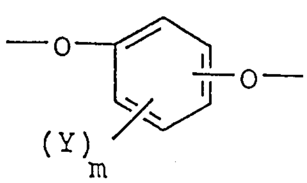,

where m is an integer from 0 - 4, said aromatic polyimide being of a film-forming molecular weight.

The present invention further relates to a process for separating one or more gases from a gaseous mixture consisting essentially of bringing said gaseous mixture into contact with one side of a gas separation membrane whereby one or more of the gases permeates said membrane preferentially, said membrane being formed from an aromatic polyimide consisting of repeating units of the formula:

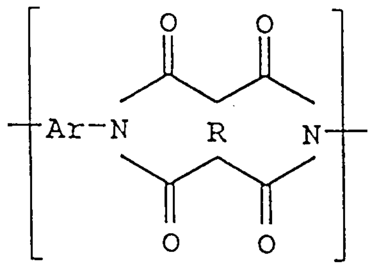

,

where —Ar— is

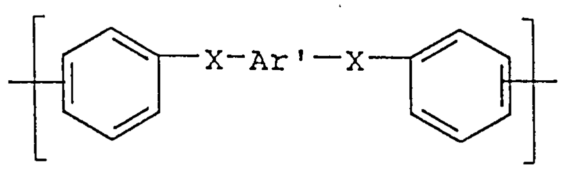

where —Ar'— is

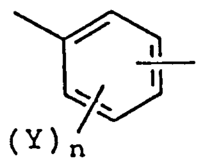

,

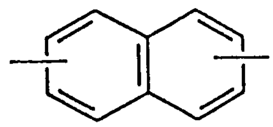

,

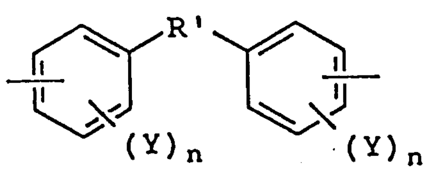

,

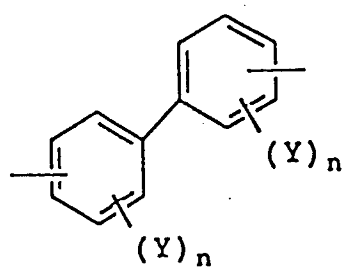

,

or mixtures thereof,

both —X— substituents are the same and are —O—,

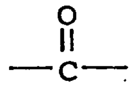, 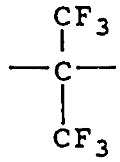, 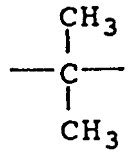, 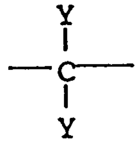 or 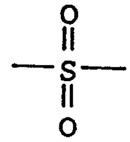

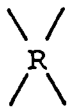 is 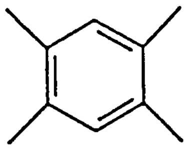, 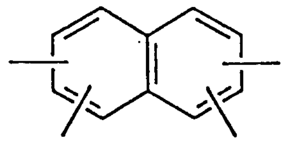,

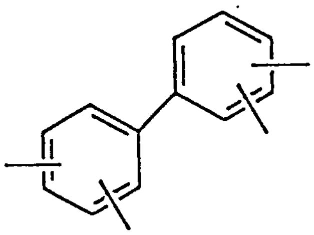, 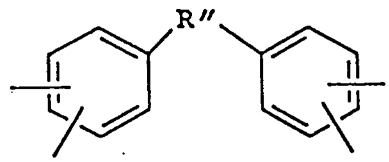.

or mixtures thereof, —Y is independently —H, alkyl groups having 1 to 6 carbon atoms, aromatic groups having 6 to 12 carbon atoms, or a halogen provided that at least one Y cannot be —H, where n is an integer from 1 to 4 and —R'— is —O—, —S—,

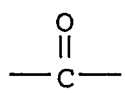, 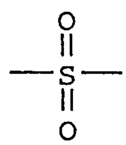,

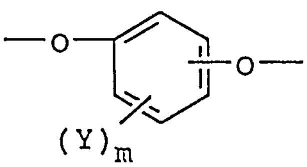, 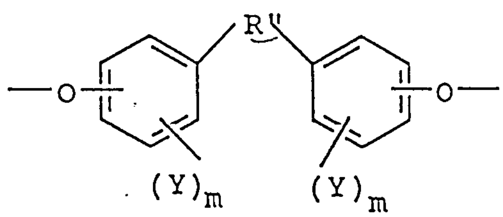

or mixtures thereof,
where R" is
—O—, —S—,

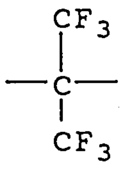 , 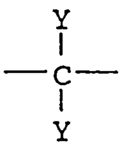 , 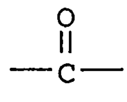 , 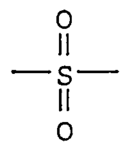 , 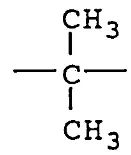 ,

or 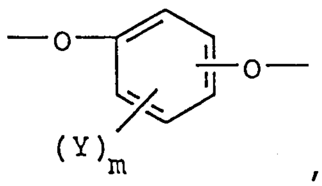 ,

where m is an integer from 0 - 4, said aromatic polyimide being of a film-forming molecular weight.

Halogen may be -F, -Cl, -Br or -I.

Gas separation membranes prepared from at least 50% by weight of such materials possess an excellent balance of gas permeation rates and selectivities of one gas over other gases in a multicomponent gas mixture. The high gas productivity of these membranes is believed to be due to optimization of the molecular free volume in the polymer structure resulting from the incorporation of said diamine-residues in the polyimide chain.

Generally, an inverse relationship between the gas permeation rate (flux) and the selectivity of said gas over other gases in a multicomponent gas mixture has been exhibited within polymer classes, such as polyimides. Because of this, prior art polyimide gas separation membranes tend to exhibit either high gas permeation rates at the sacrifice of high gas selectivities or high gas selectivities at the sacrifice of high permeation rates. It would be highly desirable for polyimide gas separation materials to exhibit high gas selectivities while maintaining high gas permeation rates.

The present invention circumvents the above shortcomings and provides exceptionally high selectivity polyimide gas separation membrane materials while maintaining good gas permeation rates.

The preferred polyimide compositions of the present invention are soluble in a wide range of ordinary organic solvents. This is a great advantage for the ease of fabrication of industrially useful gas separation membranes. These soluble polyimides can be solution cast on porous solvent resistant substrates to serve as the dense separating layer of the composite membrane. Alternatively, they can be solution cast as dense or asymmetric membranes. Insoluble polyimide compositions may be formed into gas separation membranes from their corresponding polyamic acid precursors followed by conversion to the polyimide.

Gas separation membranes prepared from the polyimide materials of the present invention possess an excellent balance of gas permeation rates and selectivities for one gas over other gases in a multicomponent gas mixture. Generally, prior polyimide gas separation materials exhibit an inverse relationship between the gas permeation rate and the selectivity of said gas over other gases in a multicomponent gas mixture. For example, U.S. 4,705,540 and U.S. 4,717,394 teach that certain alkyl-substituted polyimide material membranes have ultrahigh gas permeation rates, but suffer from only moderate gas selectivities. The polyimide materials of the present invention have been found to exhibit a much greater selectivity of oxygen from nitrogen in air separations than is disclosed therein. The polyimide materials taught in U.S. Re 30,351, U.S. 3,822,202 and U.S. 3,899,309 also suffer from moderate gas selectivities. This is demonstrated by the herein incorporated Comparative Example 1, which is typical of the polyimide membrane materials disclosed therein. Further, U.S. Re 30,351, U.S. 3,822,202, and U.S. 3,899,309 neither disclose, teach nor contemplate the use of diamines with greater than two aromatic units in their main chain or the surprisingly greater gas selectivities found for polyimide material membranes found herein. The materials of the present invention have been found to have a greater oxygen/nitrogen selectivity than disclosed for the polyetherimide gas separation membrane materials disclosed in U.S. 4,156,597 while maintaining a good oxygen permeation rate. The polyimide gas separation membrane materials disclosed in U.S. 4,378,400 suffer from low oxygen permeation rates. The polyimide membrane materials of the present invention have been found to have from 44 to 3 times the oxygen permeation rate than found for the polyimide materials disclosed in U.S. 4,378,400. It is believed that the incorporation of the diamine units described before into the backbone of thepolyimide membrane materials of the present invention allows for the optimization of the molecular free volume within membranes of the present invention. This optimization is responsible for the surprisingly high gas selectivities observed for the present materials while maintaining good gas permeation rates.

The polyimides described in this invention have high inherent thermal stabilities. They are generally stable up to

400°C in air or inert atmospheres. The glass transition temperatures of these polyimides are generally above 250°C. The high temperature characteristics of these polyimides can help to prevent the membrane compaction problems observed in other polymers at even moderate temperatures.

The polyimide membranes disclosed herein have found use in gas separations. The present invention finds use in the enrichment of oxygen and nitrogen from air for increased combustion or inerting systems, respectively; in recovery of hydrogen in refinery and ammonia plants; separation of carbon monoxide from hydrogen in syngas systems; and separation of carbon dioxide or hydrogen sulfide from hydrocarbons.

## Examples

### Comparative Example 1

To a stirred solution of 1,4-bis(4-aminophenoxy)benzene,

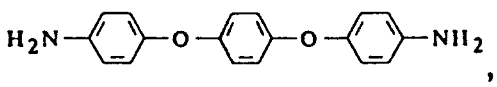

(116.8g, 0.4 mol) in N-methylpyrrolidone (1000 ml) was added 5,5,[2,2,2-trifluoro-1-(trifluoromethyl)ethylidene]-bis-1,3-isobenzofurandione,

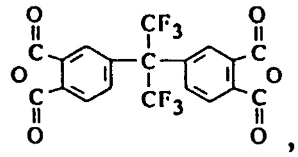

(179.3g, 0.404 mol) under an inert atmosphere at room temperature. The gold-colored reaction solution became very viscous and was allowed to stir overnight at room temperature. A solution of acetic anhydride (163.34g, 1.6 mol) and triethylamine (161.90g, 1.6 mol) was added with rapid stirring at room temperature. After mixing over the weekend at room temperature, the very viscous reaction solution was diluted with additional N-methylpyrrolidone and precipitated in water. The resulting solid was collected and washed three times with water, washed twice with methanol and allowed to air dry overnight. The solid was further dried in a vacuum oven at 0.68 bar (20 inches (0.51m) mercury) and 130°C for 5 hours and at 240°C for 3 hours to yield 278.06g product.

The polymer prepared above was found to be soluble in dimethyl-sulfoxide, meta-cresol, N,N-dimethylacetamide and N-methylpyrrolidone.

Films of the polymer prepared above were cast from a 15% polymer solution (based on weight) in N-methylpyrrolidone onto a glass plate treated with Du Pont TEFLON® dry lubricant at 100°C ± 2°C with a 38.4 x 10-5m (15-mil) knife gap. After drying on the plate at 100°C ± 2°C for 0.5 hour, the films were further dried in a vacuum oven at 20 inches (0.51m) mercury and room temperature overnight. The films were stripped off the plate and dried in a vacuum oven at 0.68 bar (20 inches (0.51m) mercury) and 120° C for 4 hours. The films were tough and flexible and could be creased without cracking.

Du Pont TEFLON® dry lubricant contains a fluorocarbon telomer which reduces the adhesion of the membrane to the glass plate.

A film, prepared as above which was 2.92 x 10-5m (1.15 mils) thick, was tested for mixed gas oxygen/nitrogen (21/79, mole) permeabilities at 722kPag (104.7 psig), 23.4°C. The results are reported below:

$0_2$ Productivity: 430 centiBarrers
$0_2/N_2$ Selectivity: 6.0

A centiBarrer is the number of cubic centimeters of gas passed by the membrane at standard temperature and pressure times the thickness of the membrane in centimeters times $10^{-12}$ divided by the permeating area of the membrane in square centimeters times the time in seconds times partial pressure difference across the membrane in 13.3 mbar (centimeters mercury (cm Hg)), i.e.,

$$\text{centiBarrer} = 10^{-12} \frac{cm^3\ (STP)\ cm}{cm^2\ sec\ 13.3\ mbar\ (cm\ Hg)}$$

**Comparative Example 2**

To a stirred solution of 1,5-naphthalene diamine (31.6g, 0.2 mol) in N,N,-dimethylacetamide (400ml) was portion wise added 5,5,[2,2,2-trifluoro-1-(trifluoromethyl)ethylidene] bis-1,3-isobenzofurandione (88.9g, 0.2 mol) under an inert atmosphere at room temperature. The reaction solution was heated to 67°C and stirred for one hour. A solution of acetic anhydride (82g) and tri-ethylamine (82g) was added to the rapidly stirring reaction solution. After stirring 2 hours at room temperature, the viscous reaction solution was precipitated in methanol. The resulting off-white solid was collected and dried in a vacuum oven at 0.68 bar (20 inches (0.51m) mercury) and 150°C for one hour and for 4 hours at 220°C.

Films of the above polyimide were cast from a 15% polymer solution (based on weight) in N-methylpyrrolidone onto a glass plate treated with Du Pont TEFLON® dry lubricant at 60° C with a 38 x 10-5m (15 mil) knife gap. The films were dried on the plate at 60°C, cooled to room temperature and stripped off the plate. The films were further dried in a oven at 0.68 bar (20 inches (0.51m) mercury) and room temperature overnight, at 110°C for 3 hours and at 220°C for 4 hours.

The films prepared above were tested for mixed gas $0_2/N_2$-(21/79, mole) permeabilities at 20.7 x $10^{-5}$ Pa (300 psig), 25°C. The results are reported below:

$0_2$ Permeability: 560 centiBarrers
$0_2/N_2$ Selectivity: 4.8

**Comparative Example 3**

To a stirred solution of 2,2-bis[4-(4-aminophenoxy)phenyl]propane,

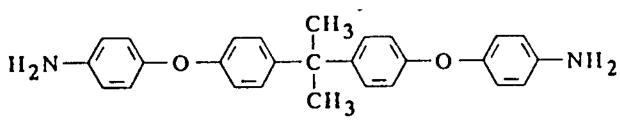
,

(41.0g, 0.10 mol) in N-methylpyrrolidone (350 ml) was added 5,5,[2,2,2-trifluoro-1-(trifluoromethyl)-ethylidene]-bis-1,3-isobenzofurandione (44.84g, 0.101 mol) under an inert atmosphere at room temperature. The reaction became very viscous and was allowed to stir overnight at room temperature. A solution of acetic anhydride (40.84g, 0.40 mol) and triethylamine (40.48g, 0.40 mol) in N-methylpyrrolidone (200 ml) was added with rapid stirring at room temperature. After stirring over the weekend at room temperature, the very viscous reaction solution was diluted with additional N-methylpyrrolidone and precipitated in water. The resulting solid was collected and washed twice with. water, washed twice with methanol and allowed to air dry overnight. The solid was further dried in a vacuum oven at 0.68 bar (20 inches (0.51m) mercury) and 145° C for 4 hours and at 225° C for 3 hours to yield 88.6g product.

The polymer prepared above was found to be soluble in dichloromethane, m-cresol, dimethylsulfoxide, N,N-dimethylacetamide and N-methylpyrrolidone.

Films of the above polyimide were cast from a 15% polymer solution (based on weight) in N-methylpyrrolidone onto a glass plate treated with Du Pont TEFLON® dry lubricant at 100°C ± 2°C with a 38.4 x $10^{-5}$m (15-mil) knife gap. After drying on the plate at 100°C ± 2°C for 0.5 hour, the films were further dried in a vacuum oven at 0.68 bar (20 inches (0.51m) mercury) and room temperature overnight. The films were stripped off the plate and dried in a vacuum oven at 0.68 bar (20 inches (0.51m) mercury) and 120°C for 4 hours. The films were tough and flexible and could be creased without cracking.

A film, prepared as above which was 3.0 x 10-5m (1.2 mils) thick, was tested for mixed gas oxygen/nitrogen (21/79, mole) permeabilities at 3378 kPa (490.0 psig), 24.4°C. The results are reported below:

$0_2$ Productivity: 250 centiBarrers
$0_2/N_2$ Selectivity: 5.7

**Comparative Example 4**

A stirred solution of 4,4,[1,4-phenylenebis(1-methylethylidene]bis-aniline,

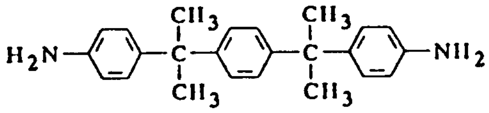

,

(68.8g, 0.20 mol), and 5,5,[2,2,2-trifluoro-1-(trifluoromethyl)ethylidene]-1,3-isobenzofurandione (97.2g, 0.2025 mol) in N-methylpyrrolidone (900 ml) was slowly heated to reflux under an inert atmosphere while collecting distillates. After heating at reflux for 4 hours, a total of 346 ml distillates had been collected. The viscous reaction solution was cooled to room temperature, diluted with N-methylpyrrolidone, and precipitated in water. The resulting solid was collected and washed twice with methanol. After air-drying overnight, the solid was dried in a vacuum oven at 0.68 bar (20 inches (0.51m) mercury) and 120°C for 3 hours and at 210°C for 4 hours to yield 139.2g product.

Films of the polymer prepared above were cast from a 15% polymer solution (based on weight) in N-methylpyrrolidone onto a glass plate treated with Du Pont TEFLON® dry lubricant at 100° C ± 2°C with a 38.4 x 10-5m (15-mil) knife gap. After drying on the plate at 100°C ± 2°C for 0.5 hour, the films were further dried in a vacuum oven at 0.68 bar (20 inches (0.51m) mercury) and room temperature overnight. The films were stripped off the plate and dried in a vacuum oven at 0.68 bar (20 inches (0.51m) mercury) and 120°C for 4 hours. The films were tough and flexible and could be creased without cracking.

A film, prepared as above which was 5.3 x 10-5m (2.1 mils) thick, was tested for mixed gas oxygen/nitrogen (21/79, mole) permeabilities at 3332 kPag (483.3 psig), 29.4°C. The results are reported below:

| | |
|---|---|
| $0_2$ Productivity: | 360 centiBarrers |
| $0_2/N_2$ Selectivity: | 4.6 |

**Comparative Example 5**

To a stirred solution of 4,4'-bis(4-aminophenoxy)biphenyl,

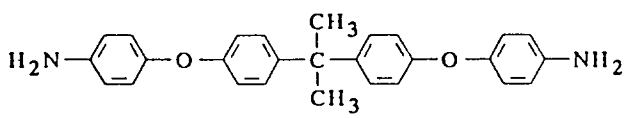

(25.0g, 0.068 mol) in N-methylpyrrolidone (200 ml) was added 5,5,[2,2,2-trifluoro-1-(trifluoromethyl)-ethylidene]1,3-isobenzofurandione (30.45g, 0.069 mol) under an inert atmosphere at room temperature. The reaction become very viscous and additional N-methylpyrrolidone (200 ml) was added. After stirring overnight at room temperature, a solution of acetic anhydride (27.70g, 0.27 mol) and triethylamine (27.4g, 0.27 mol) was added with rapid stirring at room temperature. After stirring at room temperature for 2.5 hours, the reaction solution was diluted with additional N-methylpyrrolidone and precipitated in water. The resulting solid was collected and washed three times with water, washed twice with methanol and allowed to air dry overnight. The solid was further dried in a vacuum oven at 0.68 bar (20 inches (0.51m) mercury) and 120°C for 5 hours and at 250°C for 3 hours to yield 40.8g product.

The polymer prepared above was found to be soluble in dichloromethane, m-cresol, dimethylsulfoxide, N,N-dimethylacetamide and N-methylpyrrolidone.

Films of the polymer prepared above were cast from a 15% polymer solution (based on weight) in N-methylpyrrolidone onto a glass plate treated with

Du Pont TEFLON® dry lubricant at 100°C ± 2°C with a. 38.4 x 10-5m (15-mil) knife gap. After drying on the plate at 100°C ± 2°C for 0.5 hours, the films were further dried in a vacuum oven at 0.68 bar (20 inches (0.51m) mercury) and room temperature overnight. The films were stripped off the plate and dried in a vacuum oven at 0.68 bar (20 inches (0.51m) mercury) and 120°C for 4 hours. The films were tough and flexible and could be creased without cracking.

A film, prepared as above which was 3.43 x 10-5m (1.35 mils) thick, was tested for mixed gas oxygen/nitrogen (21/79, mole) permeabilities at 3420 kPag (496 psig), 23.0°C. The results are reported below:

| | |
|---|---|
| $0_2$ Productivity: | 210 centiBarrers |
| $0_2/N_2$ Selectivity | 5.4 |

**Example 1**

To a stirred solution of 2,5-bis(4-aminophenoxy)biphenyl,

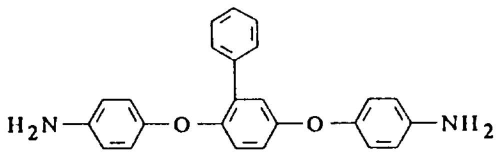

,

(149.10g, 0.40 mol) in N-methylpyrrolidone (1200 ml) was added 5,5'-[2,2,2-trifluoro-1-(trifluoromethyl)ethylidene]-1,3-isobenzofurandione (179.38g, 0.404 mol) under an inert atmosphere at room temperature. The very viscous reaction solution was stirred at room temperature for 4 hours and then a solution of acetic anhydride (163.36g, 1.60 mol) and triethylamine (161.92g, 1.60 mol) was added with rapid stirring at room temperature. After stirring overnight at room temperature, the reaction solution was diluted with. additional N-methylpyrrolidone and precipitated in water. The resulting solid was collected and washed twice with water, washed twice with methanol and allowed to air dry overnight. The solid was further dried in a vacuum oven at 0.68 bar (20 inches (0.51m) mercury) and 125°C for 4 hours and at 250°C for 4 hours.

The polymer prepared above was found to be soluble in dichloromethane, dimethylsulfoxide, N,N-dimethylacetamide and N-methylpyrrolidone.

Differential Scanning Caloimetry (DSC) was performed on the above polymer using a Du Pont Thermal Analyzer Model 990-3 with cell model HCBI-S/N00523, baseline scope = 5.0 in a nitrogen atmosphere with a 10°C/minute progress rate. A transition correlatable to a glass transition temperature (Tg) was found at 256°C.

Thermogravimetric Analysis (TGA) was performed on the above polymer using a Du Pont Thermogravimetric Analyzer Model 99-2 with cell model 951-5 in an air atmosphere at a 10°C/minute progress rate. A 10% weight loss was observed at 540°C and a 50% weight loss was observed at 570°C.

Films of the polymer prepared above were cast from a 12.5% polymer solution (based on weight) in N-methylpyrrolidone onto a glass plate treated with Du Pont TEFLON® dry lubricant at 95°C ± 2°C with a 38.4 x 10-5m (15-mil) knife gap. After drying on the plate at 95°C ± 2°C for 0.5 hour, the films were further dried in a vacuum oven at 0.68 bar (20 inches (0.51m) mercury) and room temperature overnight. The films were stripped off the plate and dried in a vacuum oven at 0.68 bar (20 inches (0.51m) mercury) and 120°C for 4 hours. The films were tough and flexible and could be creased without cracking.

A film, prepared as above which was 2.8 x 10-5m (1.1 mils) thick, was tested for mixed gas oxygen/nitrogen (21/79, mole) permeabilities at 3327 kPag (482.5 psig), 24.6°C. The results are reported below:

| | |
|---|---|
| $0_2$ Productivity: | 190 centiBarrers |
| $0_2/N_2$ Selectivity: | 5.6 |

**Example 2**

To a stirred solution of 2,7-bis(4-aminophenoxy)naphthalene,

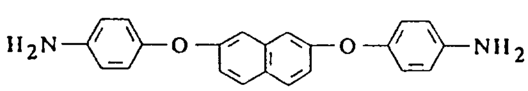

,

(25.00g, 0.073 mol) in N-methylpyrrolidone (200 ml) was added 5,5'-[2,2,2-trifluoro-1-(trifluoromethyl)ethylidene]-bis-1,3-isobenzofurandione (32.78g, 0.74 mol) under an inert atmosphere at room temperature. The very viscous golden-brown reaction solution was stirred overnight at room temperature. A solution of acetic anhydride (29.85g, 0.29 mol) and triethylamine (29.58g, 0.29 mol) was added with rapid stirring at room temperature. After stirring for 2 hours at room temperature, the very viscous reaction solution was diluted with additional N-methylpyrrolidone and precipitated in water. The resulting solid was collected and washed three times with water, washed twice with methanol and allowed to air dry overnight. The solid was further dried in a vacuum oven at 0.68 bar (20 inches (0.51m) mercury) and 120°C for 4 hours and at 250°C for 4 hours.

The polymer prepared above was found to be soluble in dichloromethane, dimethylsulfoxide, meta-cresol, N,N-dimethylacetamide, and N-methylpyrrolidone.

Films of the polymer prepared above were cast from a 15% polymer solution (based on weight) in N-methylpyrrolidone onto a glass plate treated with Du Pont TEFLON® dry lubricant at 100°C ± 2°C with a 38.4 x 10-5m (15-mil) knife gap. After drying on the plate at 100°C ± 2°C for 0.5 hour, the films were further dried in a vacuum oven at 0.68 bar (20 inches (0.51m) mercury) and room temperature overnight. The films were stripped off the plate and dried in a vacuum

oven at 0.68 bar (20 inches (0.51m) mercury) and 120°C for 4 hours. The films were tough and flexible and be creased without cracking.

A film, prepared as above which was 3.30 x 10-5m (1.30 mils) thick, was tested for mixed gas oxygen/nitrogen (21/79, mole) permeabilities at 3350 kPag (485.8. psig), 22.1°C. The results are reported below:

| | |
|---|---|
| $0_2$ Productivity: | 150 centiBarrers |
| $0_2/N_2$ Selectivity: | 5.5 |

A film, prepared as above which was 3.30 x 10-5m (1.30 mils) thick, was tested for mixed gas oxygen/nitrogen (21.79, mole) permeabilities at 3387 kPag (491.2 psig), 22.8°C. The results are reported below.

| | |
|---|---|
| $0_2$ Productivity: | 140 centiBarrers |
| $0_2/N_2$ Selectivity: | 5.5 |

## Claims

1. A gas separation membrane for preferentially separating one or more gases from a gaseous mixture formed from an aromatic polyimide consisting of repeating units of the formula:

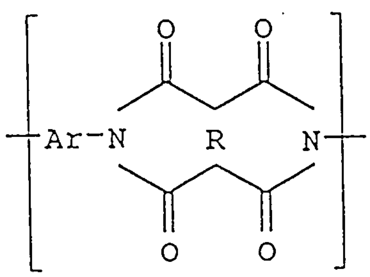 ,

where —Ar— is

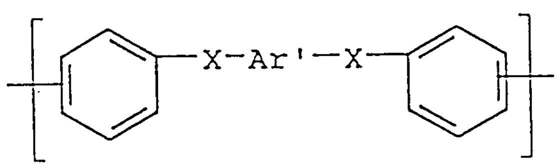

where —Ar'— is

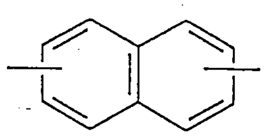 or 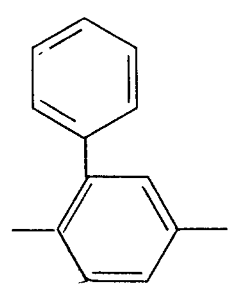

or mixtures thereof,
both —X— substituents are the same and are —O—,

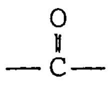, 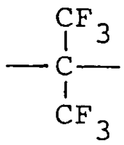, 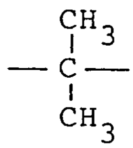, 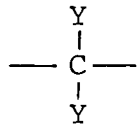 or 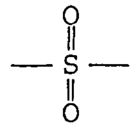

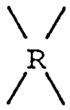 is 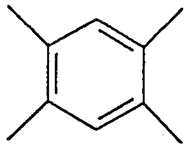, 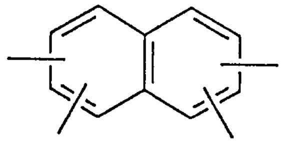,

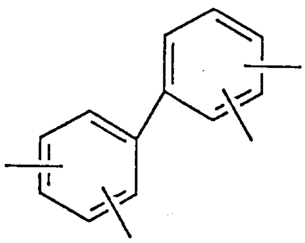, 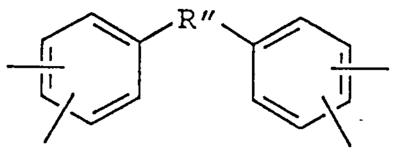

or mixtures thereof, —Y is independently —H, alkyl groups having 1 to 6 carbon atoms, aromatic groups having 6 to 12 carbon atoms, or halogen, provided that at least one —Y cannot be —H, where n is an integer from 1 to 4 and where R'' is
—O—, —S—,

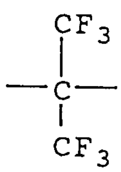, 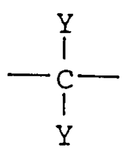, 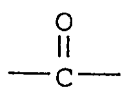, 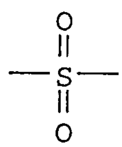, 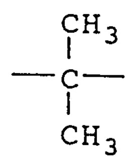,

or 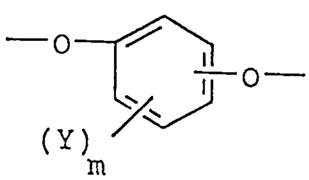,

where m is an integer from 0 - 4, said aromatic polyimide being of a film-forming molecular weight.

**2.** The aromatic polyimide gas separation membrane of Claim 1 wherein —X— is —O— or

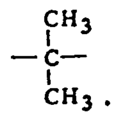

3. The aromatic polyimide gas separation membrane of Claim 2 wherein

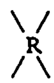 is 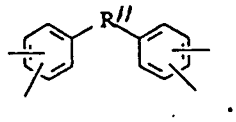

4. The aromatic polyimide gas separation membrane of Claim 3 wherein -R"- is

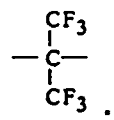

5. The aromatic polyimide gas separation membrane of Claim 4 wherein —X— is —O—.

6. A process for separating one or more gases from a gaseous mixture consisting essentially of bringing said gaseous mixture into contact with one side of a gas separation membrane whereby one or more of the gases permeates said membrane preferentially, said membrane being formed from an aromatic polyimide consisting of repeating units of the formula:

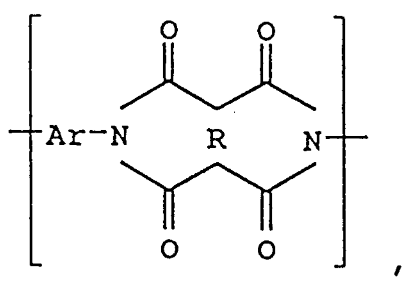

where —Ar— is

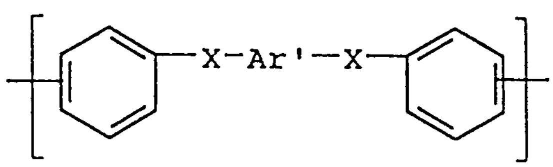

where —Ar'— is

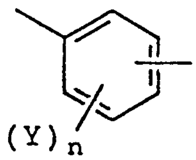,
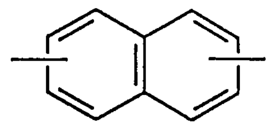,

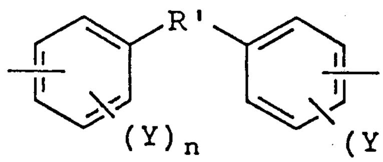,
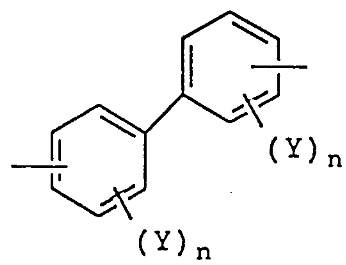,

or mixtures thereof,
both —X— substituents are the same and are
—O—,

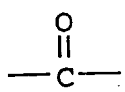,
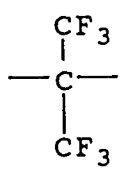,
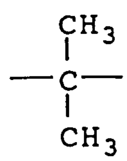,
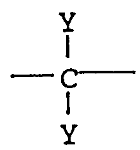 or
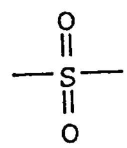

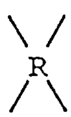 is
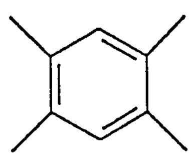,
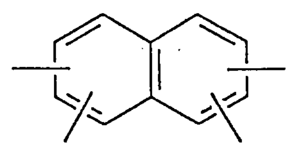,

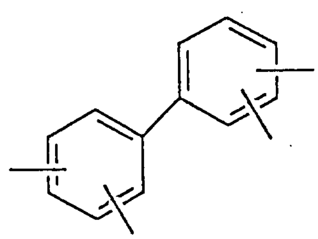,
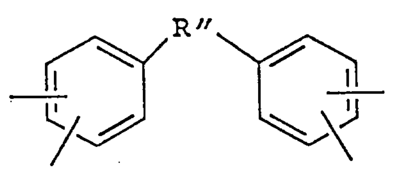

or mixtures thereof, —Y is independently —H, alkyl groups having 1 to 6 carbon atoms, aromatic groups having 6 to 12 carbon atoms, or a halogen provided that at least one Y cannot be —H, where n is an integer from 1 to 4 and —R'— is
—O—, —S—,

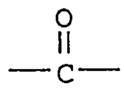, 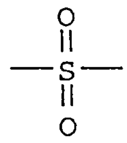,

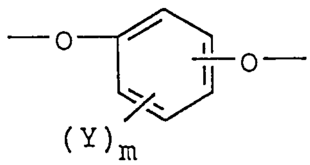, 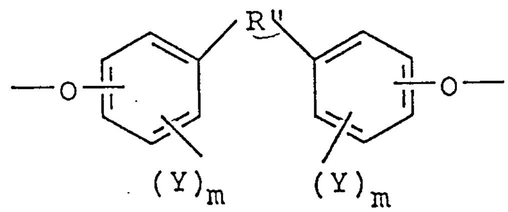

or mixtures thereof,
where R" is
—O—, —S—,

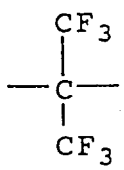, 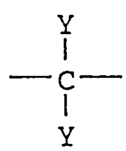, 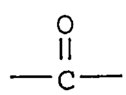, 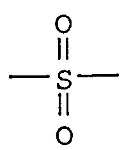, 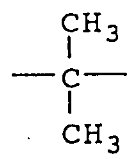,

or 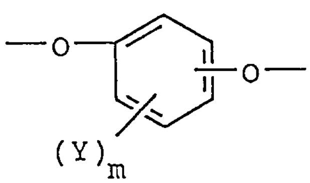,

where m is an integer from 0 - 4, said aromatic polyimide being of a film-forming molecular weight.

7. The process of Claim 6 wherein —X— is —O— or

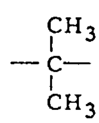.

8. The process of Claim 7 wherein

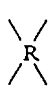 is 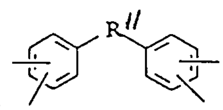.

9. The process of Claim 8 wherein —Ar' is

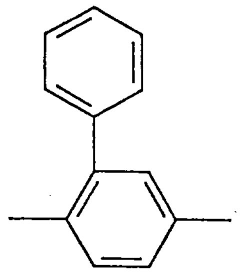

or

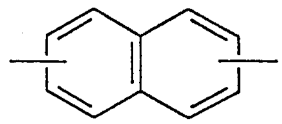

.

10. The process of Claim 9 wherein -R"- is

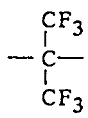

.

11. The process of Claim 10 wherein —X— is —O—.

**Patentansprüche**

1. Gastrennmembrane, vorzugsweise für die Abtrennung eines oder mehrerer Gase aus einer gasförmigen Mischung, welche aus einem aromatischen Polyimid gebildet worden ist, welches aus Wiederholungseinheiten der Formel:

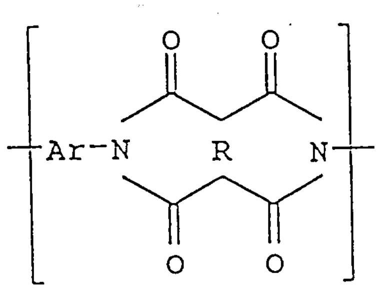

besteht, worin -Ar-

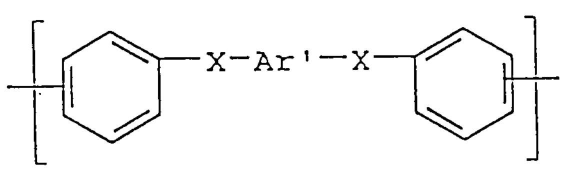

ist, worin -Ar'-

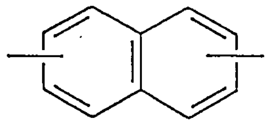 oder 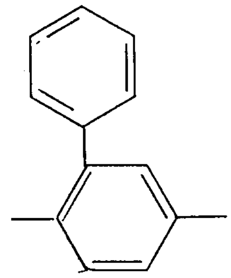

oder Mischungen von diesen bedeutet,
wobei beide Substituenten -X- gleich sind und bedeuten -O-,

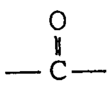, 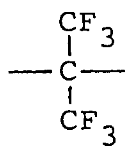, 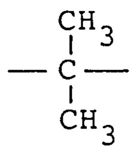, 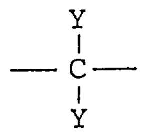 oder 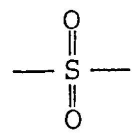,

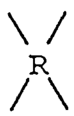 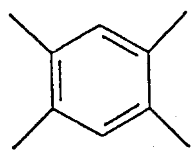, 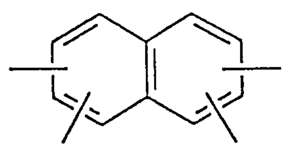,

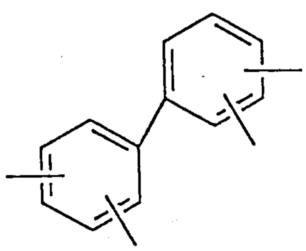 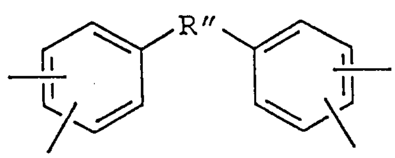,

oder Mischungen von diesen bedeutet, -Y unabhängig -H, Alkylgruppen mit 1 bis 6 Kohlenstoffatomen, aromatische Gruppen mit 6 bis 12 Kohlenstoffatomen oder Halogen bedeutet, mit der Maßgabe, daß wenigstens ein -Y nicht -H sein kann, wobei n eine Zahl von 1 bis 4 ist und wobei R"
—O—, —S—,

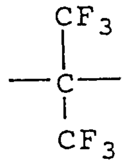 , 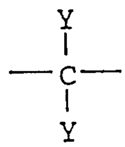 , 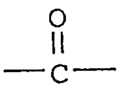 , 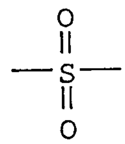 , 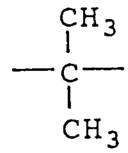 ,

oder 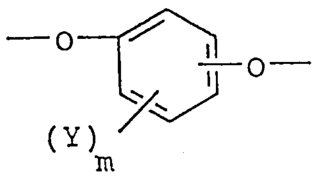 ,

bedeutet, worin m eine Zahl von 0 bis 4 darstellt, wobei das aromatische Polyimid ein filmbildendes Molekulargewicht aufweist.

2. Aromatische Polyimid-Gastrennmembrane nach Anspruch 1, worin -X- -O- oder

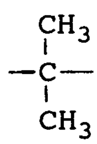

bedeutet.

3. Aromatische Polyimid-Gastrennmembrane nach Anspruch 2, worin

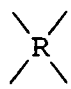 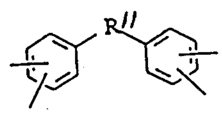

bedeutet.

4. Aromatische Polyimid-Gastrennmembrane nach Anspruch 3, worin -R"-

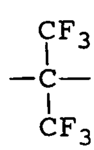

bedeutet.

5. Aromatische Polyimid-Gastrennmembrane nach Anspruch 4, worin -X- -O- bedeutet.

6. Verfahren zum Trennen von einem oder mehreren Gasen aus einer gasförmigen Mischung, welches im wesentlichen darin besteht, daß man die gasförmige Mischung mit einer Seite einer Gastrennmembrane in Berührung bringt, wodurch eines oder mehrere der Gase die Membrane bevorzugt durchdringen, wobei die Membrane aus einem aromatischen Polyimid gebildet ist, die aus Wiederholungseinheiten der Formel:

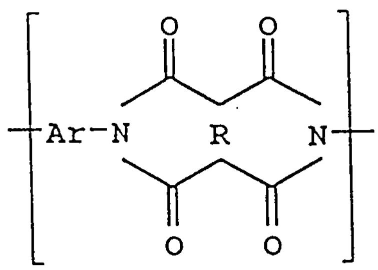

besteht, worin -Ar-

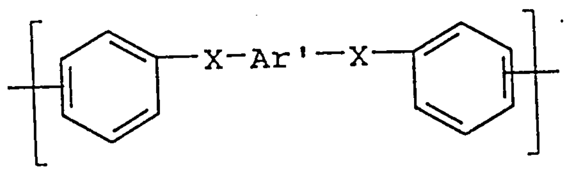

ist, worin -Ar'-

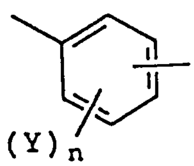

,

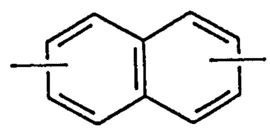

,

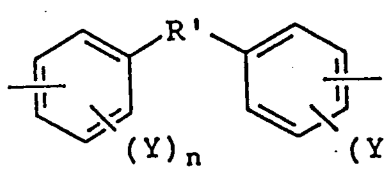

,

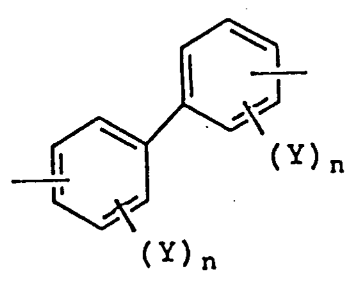

oder Mischungen von diesen bedeutet,
beide Substituenten -X- gleich sind und -O-,

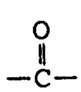

,

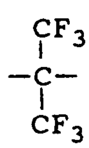

,

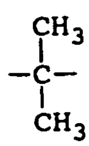

,

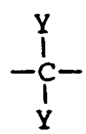

oder

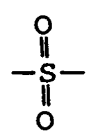

bedeuten,

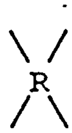 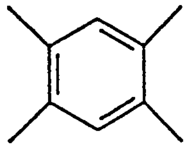 , 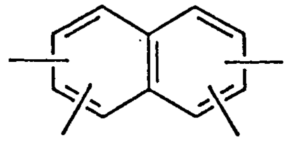 ,

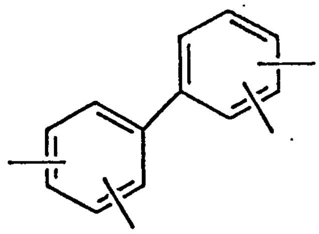 , 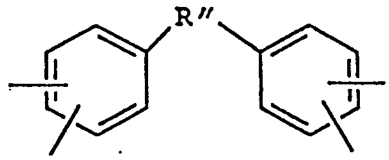

oder Mischungen von diesen darstellt, -Y unabhängig -H, Alkylgruppen mit 1 bis 6 Kohlenstoffatomen, aromatische Gruppen mit 6 bis 12 Kohlenstoffatomen oder Halogen bedeutet, mit der Maßgabe, daß wenigstens ein Y nicht -H sein kann, wobei n eine Zahl von 1 bis 4 bedeutet und -R'-

—O—, —S—,

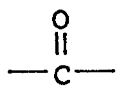 , 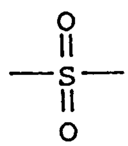 ,

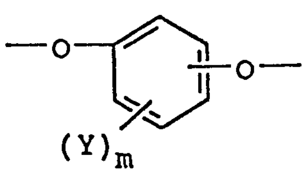 , 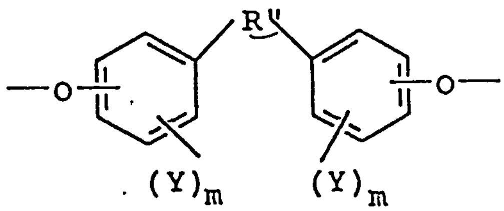

oder Mischungen von diesen bedeutet,
worin R''

—O—, —S—,

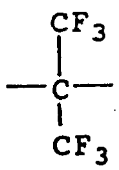 , 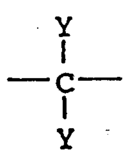 , 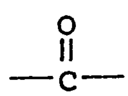 , 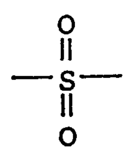 , 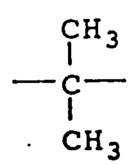 ,

oder 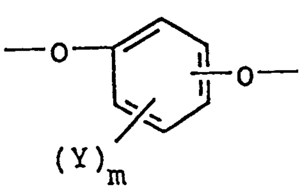

bedeutet, wobei m eine zahl von 0 bis 4 darstellt, und wobei das aromatische Polyimid ein filmbildendes Molekulargewicht aufweist.

7. Verfahren nach Anspruch 6, bei welchem -X- -O-oder

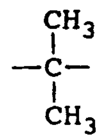

bedeutet.

8. Verfahren nach Anspruch 7, bei welchem

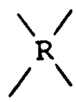

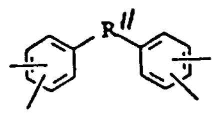

bedeutet.

9. Verfahren nach Anspruch 8, bei welchem -Ar'

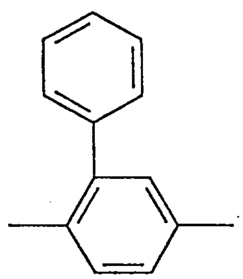

oder

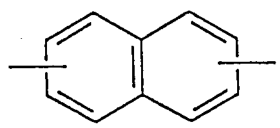

bedeutet.

10. Verfahren nach Anspruch 9, bei welchem -R"-

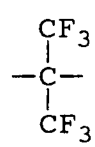

bedeutet.

11. Verfahren nach Anspruch 10, bei weichein -X- -O-bedeutet.

**Revendications**

1. Une membrane de séparation de gaz pour séparer préférentiellement un ou plusieurs gaz d'un mélange gazeux, formée à partir d'un polyimide aromatique constitué de motifs récurrents de la formule :

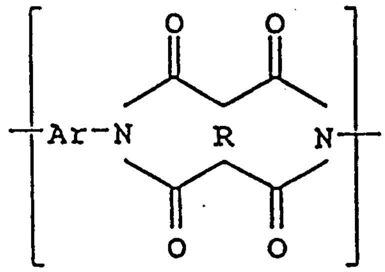

où -Ar- est

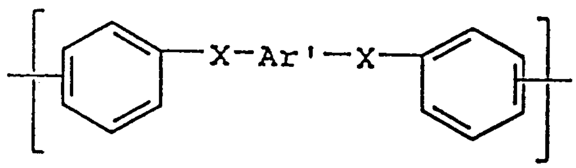

où -Ar'- est

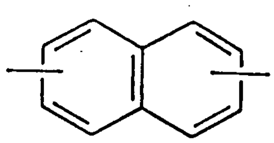

ou

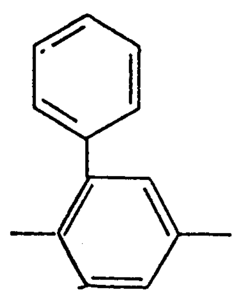

ou un mélange d'entre eux,
les deux substituants -X- sont identiques et sont -O-,

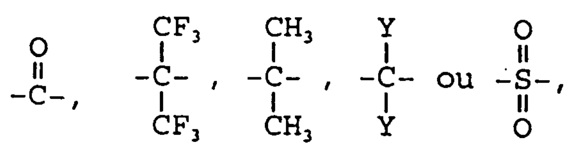

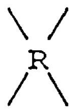 est 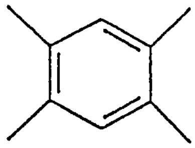, 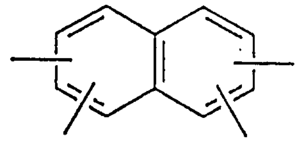,

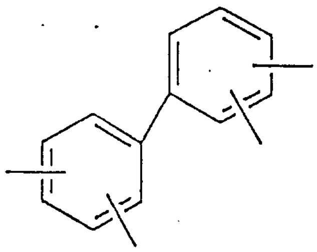, 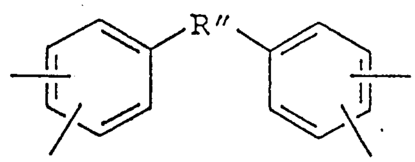

ou un mélange d'entre eux, les -Y sont indépendamment -H, des groupes alkyles ayant 1 à 6 atomes de carbone, des groupes aromatiques ayant 6 à 12 atomes de carbone ou un halogène, à condition qu'au moins un -Y ne soit pas -H, où n est un nombre entier de 1 à 4, et où R'' est
—O—, —S—,

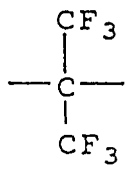, 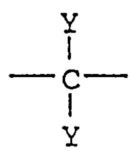, 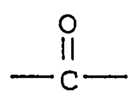, 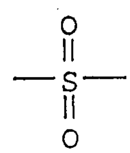, 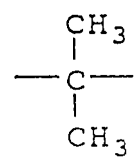,

ou 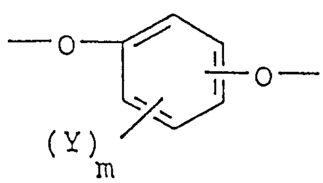,

où m est un nombre entier de 0 à 4, ledit polyimide aromatique ayant un poids moléculaire filmogène.

2. La membrane de séparation de gaz en polyimide aromatique de la revendication 1, dans laquelle -X- est -O-ou

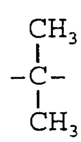.

3. La membrane de séparation de gaz en polyimide aromatique de la revendication 2, dans laquelle

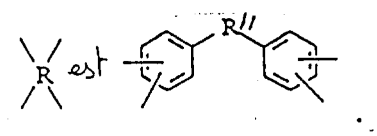

4. La membrane de séparation de gaz en polyimide aromatique de la revendication 3, dans laquelle -R"- est

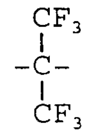 .

5. La membrane de séparation de gaz en polyimide aromatique de la revendication 4, dans laquelle -X- est -O-.

6. Un procédé pour séparer un ou plusieurs gaz d'un mélange gazeux, consistant essentiellement à amener ledit mélange gazeux en contact avec une face d'une membrane de séparation de gaz en sorte qu'un ou plusieurs des gaz traversent préférentiellement ladite membrane, ladite membrane étant formée à partir d'un polyimide aromatique constitué de motifs récurrents de la formule :

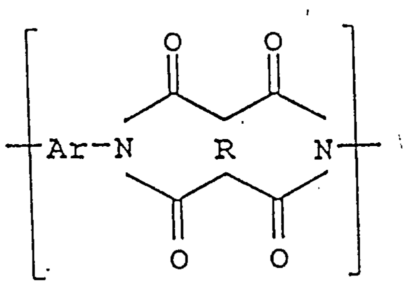

où -Ar- est

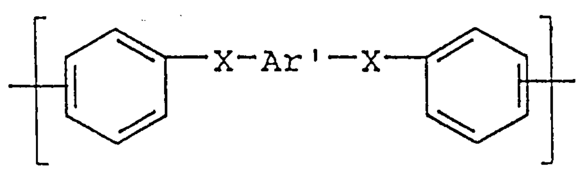

où -Ar'- est

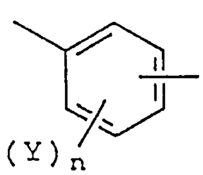 ,

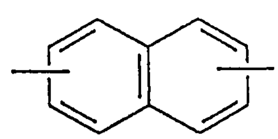 ,

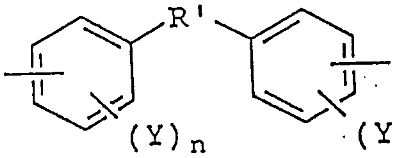 , 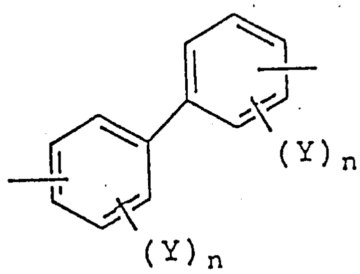 ,

ou un mélange d'entre eux, les deux substituants -X- sont identiques et sont -O-,

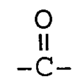 ,

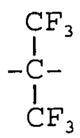 , 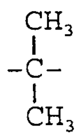 , 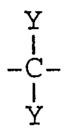 ou 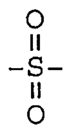 ,

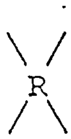 est 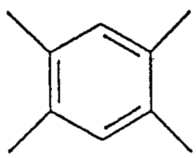 , 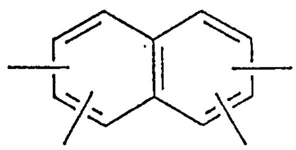 ,

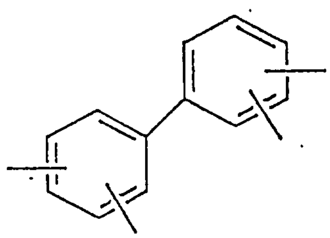 , 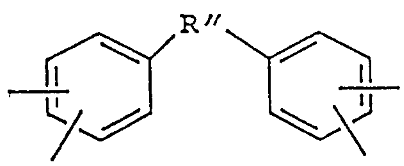

ou un mélange d'entre eux, les -Y sont indépendamment -H, des groupes alkyles ayant 1 à 6 atomes de carbone, des groupes aromatiques ayant 6 à 12 atomes de carbone ou un halogène, à condition qu'au moins un -Y ne soit pas -H, où n est un nombre entier de 1 à 4, et -R'- est

—O—, —S—,

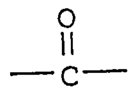 , 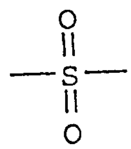 ,

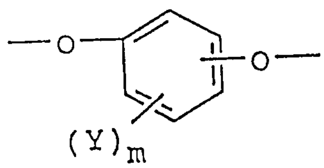 , 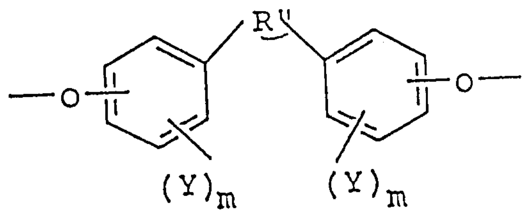

ou un mélange d'entre eux,
où R" est
—O—, —S—,

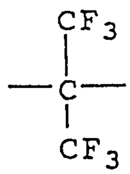 , 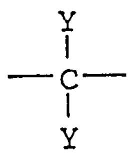 , 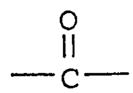 , 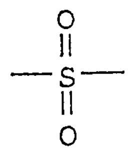 , 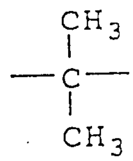 ,

ou 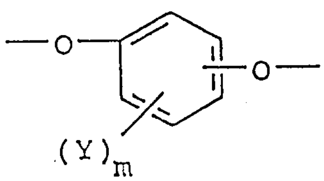 ,

où m est un nombre entier de 0 à 4, ledit polyimide aromatique ayant un poids moléculaire filmogène.

**7.** Le procédé de la revendication 6, dans lequel -X-est -O- ou

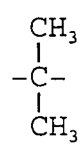 .

**8.** Le procédé de la revendication 7, dans lequel

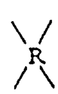 est 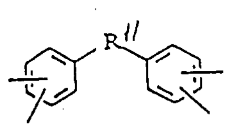 .

9. Le procédé de la revendication 8, dans lequel -Ar'- est

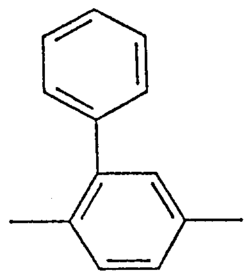

ou

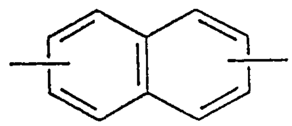

.

10. Le procédé de la revendication 9, dans lequel -R"- est

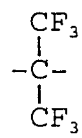

.

11. Le procédé de la revendication 10, dans lequel -X- est -O-.